# EUROPÄISCHE PATENTANMELDUNG

(11) **EP 1 164 045 A2**
(43) Veröffentlichungstag der Anmeldung: **19.12.2001**
(21) Anmeldenummer: 01113368.3
(22) Anmeldetag: 01.06.2001
(51) Int. Cl.: B60K 37/02

(54) **Kombiinstrument zur Anzeige von Messwerten und/oder sonstigen Hinweisen, insbesondere zur Verwendung in einem Kraftfahrzeug**

(30) Priorität: 16.06.2000 DE 10029729
(71) Anmelder: Mannesmann VDO Aktiengesellschaft, 60388 Frankfurt am Main (DE)
(72) Erfinder: Simon, Ernst-Ulrich, 61440 Oberursel/Ts. (DE); Kolibius, Hans, 64832 Babenhausen (DE); Zech, Stephan, 65343 Eltville am Rhein (DE); Kronenberg, Hartmut, 26969 Butjadingen (DE)
(74) Vertreter: Keller, Thomas, Dipl.-Ing. (FH)

(57) **Zusammenfassung**

Bei einem Kombiinstrument (1) zur Anzeige von Messwerten und/oder sonstigen Hinweisen, mit einer flexiblen Leiterplatte (2), auf der elektrische und/oder elektronische Bauteile (9, 10, 13) angeordnet sind, wobei Teile der flexiblen Leiterplatte (2) zwischen einer rückseitigen Abdeckung (4) und einer vorderseitigen Abdeckung (3) eingespannt sind, ist vorgesehen, dass die rückseitige Abdeckung (4) aus metallischem Werkstoff ausgebildet ist.

## Beschreibung

Die Erfindung betrifft ein Kombiinstrument zur Anzeige von Messwerten oder sonstigen Hinweisen, insbesondere in einem Kraftfahrzeug. Solche Kombiinstrumente werden verwendet um den Kraftfahrer über Betriebszustände des Kraftfahrzeuges zu informieren oder ihm sonstige Informationen zukommen zu lassen, beispielsweise in Form von Navigationshinweisen.

Aus dem Stand der Technik ist ein Kombiinstrument bekannt, bei dem auf einer flexiblen Leiterplatte elektrische und/oder elektronische Bauteile angeordnet sind. Hierbei sind Teile der flexiblen Leiterplatte zwischen einer rückseitigen Abdeckung und einer vorderseitigen Abdeckung eingespannt.

Nachteilig ist es hierbei, dass insbesondere bei Verwendung eines solchen Kombiinstrumentes in einem Kraftfahrzeug und bei Verwendung von elektronischen und/oder elektronischen Bauteilen zu thermischen Problemen kommt. Üblicherweise werden bei Leiterplatten mit elektrischen und/oder elektronischen Bauteilen zur Vermeidung von thermischen Problemen die problematischen Bauteile direkt mit Kühlkörpern verbunden und/oder mittels eines vorbeiströmenden Mediums, insbesondere Luft, gekühlt. Nachteilig bei diesen Kühlarten ist eine aufwendige und platzbeanspruchende Bauweise.

Aufgabe der Erfindung ist es daher, eine einfache und platzsparende Kühlung für die Bauteile anzugeben.

Diese Aufgabe wird dadurch gelöst, dass die rückseitige Abdeckung der flexiblen Leiterplatte aus einem metallischen Werkstoff, insbesondere Aluminium oder Kupfer, ausgebildet ist. Die Erfindung nutzt die Erkenntnis, dass die von dem elektrischen und/oder elektronischen Bauteilen erzeugte Wärme durch die dünne flexible Leiterplatte zu der rückseitigen Abdeckung geleitet werden kann und die metallische rückseitige Abdeckung für eine wirksame Kühlung sorgt. So kann auch eine große Anzahl von Wärmequellen, wie beispielsweise Beleuchtungsvorrichtungen, wie Leuchtdioden ohne zusätzliche weitere Kühleinrichtungen in einem engen räumlichen Zusammenhang auf der flexiblen Leiterplatte angeordnet werden. Die rückwärtige Abdeckung kann beispielsweise durch Ausstanzen eines entsprechenden Bleches hergestellt werden.

Sofern zusätzliche rückwärtige Abdeckungen vorhanden sind und Teile der flexiblen Leiterplatte zwischen den zusätzlichen rückwärtigen Abdeckungen und der vorderen Abdeckung eingespannt sind, ist es bei entsprechender Ausgestaltung der vorderen Abdeckung möglich, die sichtbare Anzeige in unterschiedlichen Ebenen und /oder Winkeln anzuordnen.

Dadurch, dass Beleuchtungsmittel direkt auf der flexiblen Leiterplatte angeordnet sind, kann auch die von diesen erzeugte Wärme wirksam über die rückseitige Abdeckung abgeführt werden. Die Ausgestaltung der Beleuchtungsmittel als Leuchtdioden bringt eine dauerhafte Beleuchtungsvorrichtung, für die keine Auswechselbarkeit bzw. Reparaturmöglichkeit vorgesehen werden muss, da die Leuchtdioden mit der entsprechenden Bestromung eine höhere Lebensdauer haben als das Kraftfahrzeug, in dem sie eingebaut sind.

Durch Öffnungen in der vorderseitigen Abdeckung ist es möglich, auch größere Bauteile direkt auf der flexiblen Leiterplatte anzuordnen und/oder Beleuchtungsmittel entfernt von dem beleuchtendem Gegenstand auf der Leiterplatte anzuordnen.

Dadurch dass die Öffnungen von Wandabschnitten umgeben sind, die von Teilabschnitten eines Zifferblattes abgedeckt sind, kann beispielsweise das Licht von Beleuchtungsmitteln für die jeweiligen Teilabschnitte des Zifferblatts verwendet werden, beispielsweise um ein bestimmtes Piktogramm zu beleuchten, das einen bestimmten Informationsinhalt aufweist.

Dadurch, dass ein Messwerk derart mit der rückseitigen Abdeckung befestigt ist, das zwischen dem Messwerk und der rückseitigen Abdeckung ein Teil der flexiblen Leiterplatte angeordnet ist, kann eine einfache elektrische Verbindung zwischen der flexiblen Leiterplatte und dem Messwerk hergestellt werden. Das Messwerk kann beispielsweise mit der rückseitigen Abdeckung verschraubt oder verclipst sein. Eine besonders einfach herzustellende und dabei dauerhaft herzustellende Verbindung kann dadurch hergestellt werden, dass das Messwerk Spreizdübel aufweist, die durch Öffnungen der flexiblen Leiterplatte und der rückseitigen Abdeckung gesteckt und dann gespreizt werden und so das Messwerk befestigen.

Eine einfache elektrische Ansteuerung des Messwerks lässt sich dadurch realisieren, dass das Messwerk elektrische Anschlüsse aufweist, die mit elektrischen Kontaktflächen auf der flexiblen Leiterplatte verbunden sind. Besonders einfach lässt sich dies realisieren, wenn die Anschlüsse des Messwerks auf die Anschlüsse der flexiblen Leiterplatte gepresst werden. Bei einem Verlöten der Anschlüsse des Messwerks mit den Kontaktflächen der flexiblen Leiterplatte werden die elektrischen Verbindungen besonders dauerhaft und störunanfällig.

Dadurch, dass das Messwerk eine Zeigerwelle aus lichtleitendem Material aufweist und dass das Gehäuse des Messwerks derart ausgestaltet ist, dass es unterhalb der Zeigerwelle zur flexiblen Leiterplatte hin eine Einbuchtung aufweist, kann ein auf der Zeigerwelle angebrachter lichtleitender Zeiger einfach durch eine auf der flexiblen Leiterplatte innerhalb des Einschnitts angebrachten Beleuchtungseinrichtung beleuchtet werden.

Durch Verbinden der flexiblen Leiterplatte mit einer starren Leiterplatte kann auf der starren Leiterplatte die Ansteuerschaltung für die auf der flexiblen Leiterplatte angeordneten Bauteile platzsparend hergestellt werden.

Die starre Leiterplatte ist einfach, dauerhaft und platzsparend montierbar, wenn sie hinter der hinteren Abdeckung einklipsbar ist.

Die Erfindung wird nachfolgend anhand eines besonders bevorzugten Beispiels näher erläutert. Es zeigen:
- Figur 1:: den Schnitt durch ein besonders bevorzugtes Kombinationsinstrument nach der Erfindung und das stilisierte Auge eines Beobachters
- Figur 2:: einen Teilausschnitt aus Figur 1 mit einem Messwerk

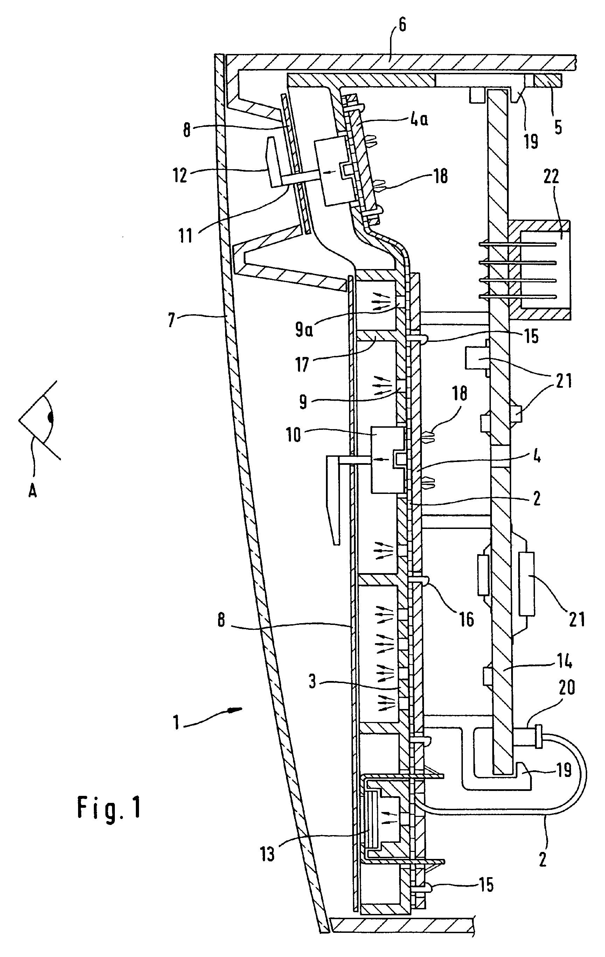

In Figur 1 erkennt man ein Kombiinstrument 1 im Schnitt und das stilisierte Auge A eines die Anzeigen auf den Kombiinstrument 1 betrachtenden Beobachters. Das Kombiinstrument 1 weist eine flexible Leiterplatte 2 auf, die in Teilen zwischen einer vorderseitigen Abdeckung 3 und einer rückseitigen Abdeckung 4 eingespannt ist. Die vorderseitige Abdeckung 3 ist im Ausführungsbeispiel als Teil eines Systemträgers 5 ausgestaltet. Von dem Kombiinstrument 1 sind weiterhin ein Frontrahmen 6, eine durchsichtige Scheibe 7, Zifferblätter 8, 8a, Leuchtdioden 9, Messwerke 10 mit Zeigerwellen 11, Zeiger 12, ein Flüssigkristalldisplay 13 und eine starre Leiterplatte 14 dargestellt. Die rückseitigen Abdeckungen 4, 4a sind erfindungsgemäß aus Metall, vorzugsweise aus gestanzten Aluminiumblech hergestellt. An der vorderseitigen Abdeckung sind Rastklipse 15 ausgebildet, die Öffnungen der flexiblen Leiterplatte 2 und der rückseitigen Abdeckung 4, 4a durchragen und mit Nasen 16 die rückseitige Abdeckung 4, 4a gegen die vorderseitige Abdeckung 3 drücken. So ist eine schnelle, einfache und dauerhafte Montage der rückseitigen Abdeckungen 4, 4a durch einfaches Aufklipsen der rückseitigen Abdeckungen 4, 4a möglich. Es ist natürlich auch möglich, die vorderseitige Abdeckung 3 mit den rückseitigen Abdeckungen 4, 4a beispielsweise zu verschrauben oder zu vernieten.

Dadurch, dass die rückseitige Abdeckung 4 im Bereich neben den Leuchtdioden 9 gegen die vorderseitige Abdeckung 3 gedrückt wird, liegt die flexible Leiterplatte 2 im Bereich der Leuchtdioden 9 an der rückseitigen Abdeckung 4 an. So kann die in den Leuchtdioden 9 erzeugte Wärme wirksam über die rückseitige Abdeckung 4 abgeführt werden, da die flexible Leiterplatte 2 wegen ihrer geringen Dicke nur einen geringen thermischen Widerstand aufweist. Die Leuchtdioden 9 befinden sich in Aussparungen der vorderseitigen Abdeckung 3 und können so mit ihrem Lichtstrahl die Zifferblätter 8, 8a beleuchten. Der Systemträger 5 weist Wandabschnitte 17 auf, die bei bestimmten Leuchtdioden 9, beispielsweise bei der dargestellten Leuchtdiode 9a bewirken, dass das Licht der entsprechenden Leuchtdiode 9a nur einen bestimmten Bereich des Zifferblatts 8 beleuchtet. Das Messwerk 10 ist so an der rückseitigen Abdeckung 4 befestigt, dass es auf die flexible Leiterplatte 2 gedrückt wird. Das Gehäuse des Messwerks 10 weist eine Einbuchtung auf, so dass eine Leuchtdiode 9 auf der Leiterplatte 2 unterhalb der Zeigerwelle 11 angeordnet werden kann. Die Zeigerwelle 11 ist aus lichtleitendem Material hergestellt. So kann Licht der Leuchtdiode 9 über die Zeigerwelle 11 in den Zeiger 12 eingekoppelt werden. Die Messwerke (10) können beispielsweise als Quotientenmesswerke oder als Schrittmotoren ausgestaltet sein.

Auch das Flüssigkristalldisplay 13 kann von einer Leuchtdiode 9 direkt beleuchtet werden. Die starre Leiterplatte 14 ist über zweite Rastklipse 19 des Systemträgers 5 befestigt und elektrisch leitend über einen Nullkraftstecker 20 mit der flexiblen Leiterplatte 2 verbunden. Die Verbindung kann auch beispielsweise durch eine Bügellötung der flexiblen Leiterplatte mit der starren Leiterplatte 14 ausgeführt sein.

Auf der starren Leiterplatte 14 sind elektrische Bauteile 21 zur Ansteuerung der Messwerke 10, Leuchtdioden 9 und des Flüssigkristalldisplays 13 angeordnet. Die starre Leiterplatte 14 weist weiterhin einen Kontaktstecker 22 auf, über den das Kombiinstrument 1 mit einem nicht dargestellten Kraftfahrzeug elektrisch verbindbar ist.

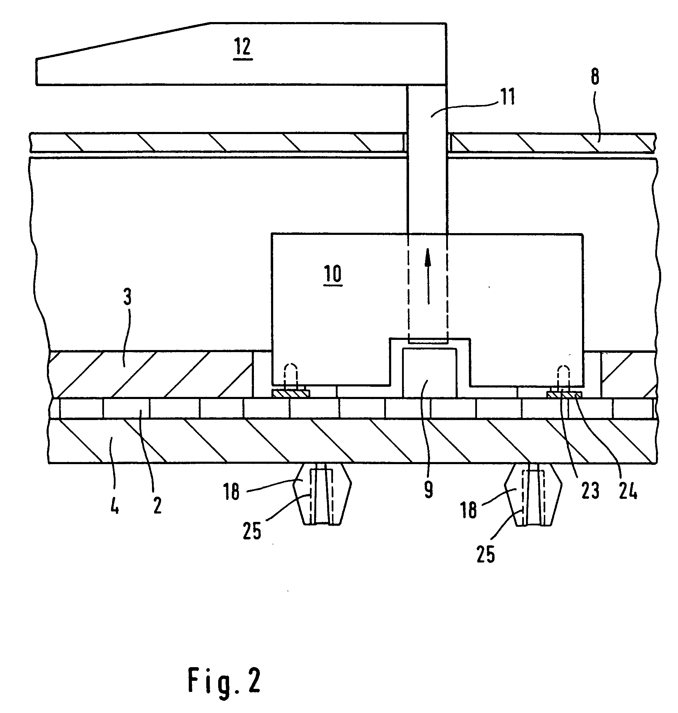

In Figur 2 erkennt man, dass das Messwerk 10 elektrische Anschlüsse 23 aufweist, die auf elektrische Kontaktflächen 24 der flexiblen Leiterplatte angepresst werden und so die Messwerke 10 über die flexible Leiterplatte 2 und die in Figur 1 dargestellte starre Leiterplatte 14 mit den elektrischen Bauteilen 21 elektrisch verbunden sind. Es ist auch möglich, die elektrischen Anschlüsse 23 mit den elektrischen Kontaktflächen 24 zu verlöten. In Figur 2 erkennt man weiterhin, dass die Leuchtdiode 9 ihr Licht über die Zeigerwelle 11 in den Zeiger 12 einkoppeln kann. Die Spreizdübel 18 sind als Teil des Gehäuses des Messwerks ausgeführt. So kann das Messwerk 10 durch Einführen der Spreizdübel durch Öffnungen der flexiblen Leiterplatte 2 und der rückseitigen Abdeckung 4 geführt und so befestigt werden. Ein Lösen der Spreizdübel 18 nach der Montage kann durch Sicherungsstifte 25, die jeweils in die Spreizdübel 18 eingeführt sind, wirksam verhindert werden.

## Patentansprüche

1. Kombiinstrument (1) zur Anzeige von Messwerten und/oder sonstigen Hinweisen, mit einer flexiblen Leiterplatte (2), auf der elektrische und/oder elektronische Bauteile (9, 10, 13) angeordnet sind, wobei Teile der flexiblen Leiterplatte (2) zwischen einer rückseitigen Abdeckung (4) und einer vorderseitigen Abdeckung (3) eingespannt sind, **dadurch gekennzeichnet, dass** die rückseitige Abdeckung (4) aus metallischem Werkstoff ausgebildet ist.

2. Kombiinstrument nach Anspruch 1, **dadurch gekennzeichnet, dass** zusätzliche rückwärtige Abdeckungen (4a) vorhanden sind, dass Teile der flexiblen Leiterplatte (2) zwischen der zusätzlichen rückseitigen Abdeckung (4a) und der vorderen Abdeckung (3) eingespannt sind.

3. Kombiinstrument nach einem der vorstehenden Ansprüche, **dadurch gekennzeichnet, dass** Beleuchtungsmittel auf der flexiblen Leiterplatte (2) angeordnet sind.

4. Kombiinstrument nach Anspruch 3, **dadurch gekennzeichnet, dass** die Beleuchtungsmittel als Leuchtdioden (9) ausgestaltet sind.

5. Kombiinstrument nach einem der vorstehenden Ansprüche, **dadurch gekennzeichnet, dass** die vorderseitige Abdeckung (3) Öffnungen zur Aufnahme elektrischer und/oder elektronischer Bauteile (9, 10, 13) aufweist.

6. Kombiinstrument nach Anspruch 5, **dadurch gekennzeichnet, dass** die Öffnungen von Wandabschnitten (17) zu umgeben sind, dass die Wandabschnitte (17) auf der den Öffnungen entgegengesetzten Seite von einem Teil eines Zifferblatts (8) abgedeckt werden.

7. Kombiinstrument nach einem der vorstehenden Ansprüche, **dadurch gekennzeichnet, dass** Messwerke (10) derart mit der rückseitigen Abdeckung (4) befestigt sind, dass zwischen dem Messwerk (10) und der rückseitigen Abdeckung (4) ein Teil der flexiblen Leiterplatte (2) angeordnet ist.

8. Kombiinstrument nach Anspruch 7, **dadurch gekennzeichnet, dass** das Messwerk (10) mittels Spreizdübeln (18) auf der rückseitigen Abdeckung (4) befestigt ist.

9. Kombiinstrument nach Anspruch 7 oder 8, **dadurch gekennzeichnet, dass** das Messwerk (10) elektrische Anschlüsse (23) aufweist, über die das Messwerk (10) ansteuerbar ist und dass die elektrischen Anschlüsse mit Kontaktflächen der flexiblen Leiterplatte (2) elektrisch verbunden sind.

10. Kombiinstrument nach Anspruch 9, **dadurch gekennzeichnet, dass** die elektrischen Anschlüsse (23) des Messwerks (10) auf die elektrischen Kontaktflächen (24) der flexiblen Leiterplatte (2) gepresst werden und so der elektrische Kontakt hergestellt wird.

11. Kombiinstrument nach Anspruch 9, **dadurch gekennzeichnet, dass** die Anschlüsse (23) des Messwerks (10) auf die elektrischen Kontaktflächen (24) der Leiterplatte (2) gelötet sind.

12. Kombiinstrument nach einem der Ansprüche 7 bis 11, **dadurch gekennzeichnet, dass** das Messwerk (10) eine Zeigerwelle (11) aus lichtleitendem Material aufweist, dass das Gehäuse des Messewerks (10) derart ausgestaltet ist, dass es unterhalb der Zeigerwelle eine Einbuchtung aufweist, dass eine Beleuchtungseinrichtung innerhalb der Einbuchtung auf der Leiterplatte (2) angeordnet ist.

13. Kombiinstrument nach einem der vorstehenden Ansprüche, **dadurch gekennzeichnet, dass** die flexible Leiterplatte (2) mit einer starren Leiterplatte (14) elektrisch leitend verbunden ist, dass auf der starren Leiterplatte (14) elektronische Bauteile (21) angeordnet sind, dass die elektronischen Bauteile (21) auf der starren Leiterplatte (14) die auf der flexiblen Leiterplatte (2) angeordneten elektrischen und/oder elektronischen Bauteile (9, 10, 13) ansteuern.

14. Kombiinstrument nach Anspruch 13, **dadurch gekennzeichnet, dass** die starre Leiterplatte (14) hinter der hinteren Abdeckung (4) angeordnet ist.

15. Kombiinstrument nach Anspruch 14, **dadurch gekennzeichnet, dass** die vordere Abdeckung als Teil eines Systemträgers ausgebildet ist, dass die starre Leiterplatte hinter der hinteren Abdeckung (4) in den Systemträger (5) einklipsbar ist.
